# EUROPÄISCHE PATENTANMELDUNG

(11) **EP 0 813 822 A2**
(43) Veröffentlichungstag der Anmeldung: **29.12.1997**
(21) Anmeldenummer: 97103259.4
(22) Anmeldetag: 27.02.1997
(51) Int. Cl.: A23P 1/08, A23L 1/217, A23L 1/164, A23L 1/212

(54) **Verfahren und Vorrichtung zum Zugeben von Geschmacksträger in Lebensmitteln**

(30) Priorität: 25.02.1997 DE 19707532; 28.02.1996 DE 29603587 U
(71) Anmelder: Edelmann, Hans-Joachim, 31737 Rinteln (DE); Ebenhan, Wolfgang, 31737 Rinteln (DE)
(72) Erfinder: Ebenhan, Wolfgang, 31737 Rinteln (DE)

(57) **Zusammenfassung**

Die vorliegende Erfindung beschreibt Verfahren und Vorrichtung zur Herstellung von Pommes-Frites-ähnlichen Nahrungsmitteln, basierend auf natürlichen Früchten, wie z.B. Kartoffeln, Mais, Reis, Soja usw. Hierbei wird die äußere und/oder innere Form sowie der Zustand der Fruchtkörper so verändert und bearbeitet, daß Geschmacksträger adhäsiv, kohäsiv, durch Formschluß oder Beimengung in transport- und gebrauchssicherer sowie den menschlichen Verzehransprüchen angepaßter Form an- und/oder eingelagert werden können. Die Pommes-Frites- oder Fruchtkörper können in den unterschiedlichsten Formen hergestellt und mit Lebensmittel bzw. Geschmacks- und Farbstoffen innen und/oder außen versetzt bzw. veredelt werden. Die erfindungsgemäßen Varianten sind den Ansprüchen zu entnehmen.

## Beschreibung

Es sind bereits eine Reihe von Vorrichtungen bekannt, die sich mit der Herstellung von Pommes Frites beschäftigen. So wird z.B. beschrieben, daß zum Vorschneiden der Kartoffelstücke ein Drehtisch herangezogen wird, der am Rand mit nach oben geführten Messern versehen ist, die je zu viert einen quaderförmigen Schacht bilden; daß an einer Beschickungsstation eine Zusammenführung für Kartoffeln, vereinzelt jeweils zum Auflegen auf einen solchen Schacht und darüber ein Stempel zum Hineindrücken der Kartoffeln in den Schacht eingerichtet ist, und an einer Ausstoßstation ein Stempel zum Herausdrucken der Kartoffelstücke aus dem Schacht nach unten vorgesehen wird und zusätzlich zwischen der Beschickungsstation und der Ausgabestation waagerechte Messer dicht über und unter der Schachtbahn vorgesehen sind. Nach der Ausstoßstation sind vorzugsweise waagerechte Kanäle für in Reihe hintereinander angeordnete, schrittweise vorantransportierte Kartoffelstücke, mit weiteren Bearbeitungsstationen implementiert. Die Kanäle sollen hierbei einen mit dem Querschnitt der Kartoffelstücke übereinstimmenden, im wesentlichen geschlossenen Querschnitt aufweisen, wobei ihre Decke zum Einführen von Werkzeugen durchbrochen ist.

Eine Vorrichtung dieser An dient vor allem zur sicheren Fixierung von Kartoffelstücken, so daß ein Zerbrechen bzw. eine Gefahr der Beschädigung minimiert wird.

Beschrieben werden auch Verfahren, die z.B. das Schneiden in Streifen bzw. Stäbchen in der üblichen Größe vorsehen, bei denen abweichend von den besseren bekannten Produkten, nicht ein Wellenschnitt vorgenommen wird, sondern ein üblicher glatter Schnitt. Bevorzugt werden hierbei Größen von 8 mm x 8 mm bzw. 7 mm x 7 mm, die vor allem in der Fast-Food-Industrie üblich sind. Daraufwird der sogenannte Blanchiervorgang im Wasser eingeleitet, wobei die Wassertemperatur zwischen 75° und 85° C und die Zeitdauer bei 4-12 Minuten liegt.

Der nächste Schritt ist die Luftrocknung, wobei üblicherweise ein Wassergehalt der Kartoffel von ca. 80% angenommen wird, was sich aus dem langjährigen Durchschnitt ergibt.
Dieser Trocknungsvorgang wird bei Temperaturen von ca. 55° - 70° C vorgenommen und beinhaltet eine Durchlaufzeit von 4-8 Minuten, wobei der Wassergehalt auf ca. 72% verringert wird. Nach einer zwischengeschalteten Auskühlphase zum Angleichen der kartoffelinternen Parameter erfolgt ein erster Frittiervorgang bei einer Temperatur von ca. 170° C. Die Frittierdauer beträgt hierbei ca. 50 Sekunden, wobei der Wassergehalt auf etwa 65% herabgesetzt wird. Nach einem Kühlschritt ist eine zweite Frittierstufe vorgesehen, die etwa bei 180° C 120 Sekunden lang auf die Kartoffel einwirkt. Der Wassergehalt wird hierbei auf etwa 50% reduziert. Nach dem Abkühlvorgang ist das sogenannte Frosten vorgesehen, welches bei ca. -35° C 15-25 Minuten dauert und zu einem lagerfähigen Produkt führt.

Auch bei diesen Lösungen sind gezielte Variationen des Geschmackseffektes durch Geschmacksadditive nicht möglich.

Bekannt sind auch sogenannte Kartoffelbohrer zur Herstellung einer optisch anders gearteten Variante von Pommes Frites, wobei der Kartoffelbohrer an seiner Wendel ein Hohlmesser hat, welches den spiralförmigen Pommes-Frites-Körper aus der Kartoffel herausschneidet. Diese Form soll jedoch lediglich durch ihre anders geartete Oberfläche appetitanregend wirken und z.B. für die Garnierung von Platten eingesetzt werden. Das Hinzufügen von Geschmacksstoffen ist hier gleichfalls nicht beschrieben.

Die erfindungsgemäße Pommes-Frites-Variante berücksichtigt den vital notwendigen Gehalt an Vitaminen und Mineralstoffen. Die Ascorbinsäure (AA) der Kartoffel sowie die Abnahme durch unterschiedliche Gar- bzw. Lagerungsprozesse wurden bereits des öfteren untersucht. Übereinstimmend wurde gefunden, daß bei verschiedenen Be- und Verarbeitungsprozessen der Vitamin-C-Gehalt unterschiedlich abnimmt.

Zur Vereinfachung der Meßverfahren wird in der Literatur der AA-Gehalt als Nährwertindikator angesehen. So führen die bei der Normalform der Verarbeitung üblichen langen Wasch- und Erhitzungszeiten bei normaler Atmosphäre zu hohen Verlusten von AA.

Von Jonsson (1981) wird nachgewiesen, daß bei einer Herstellungs-, Gar- und Warmhaltezeit von einer Stunde der Verlust an AA bei 73% liegt.

Diese Verluste werden beim erfindungsgemäßen Verfahren verhindert. Hinzu kommt (Leinert, 1981), daß beim erfindungsgemäßen Herstellungsverfahren die Kaliumwerte bei Kartoffeln um 20% höher liegen als beim üblichen Wasser-Garverfahren.

Interessant ist auch die Wirkung von Zuckerrestmolekülen, die üblicherweise als Glycoalkaloide (GA) bezeichnet werden.

GA sind am Geruch und am Geschmack der Kartoffeln beteiligt, besitzen jedoch bei einer Konzentration von über 20 mg/100g Frischsubstanz eine negative Auswirkung hin zum bitteren und kratzigen Geschmack und wirken für den Menschen toxisch bei Gehalten oberhalb von 20 mg/100g Kartoffelsubstanz (Störungen im Magen-Darm-Trakt sowie in der menschlichen Motorik). Nach Solms (1985) wird beim erfindungsgemäß vorgeschlagenen Herstellverfahren eine erwünschte Abnahme der GA festgestellt, während bei den meisten anderen Verarbeitungsverfahren der GA-Gehalt stabil bleibt.

Zu beachten sind auch die Einwirkungen auf den Kartoffelgeschmack. Nach Buri besteht das Geschmacksprofil einer Kartoffel aus einem System mehrerer Komponenten, die z.T. aus flüchtigen und nicht flüchtigen Verbindungen bestehen.

Beim erfindungsgemäßen Herstellverfahren werden vermehrt heterozyklische Verbindungen gebildet mit den typischen Back- bzw. Röstnoten. Hinzu kommen verstärkende Brataromen, die sich aus dem Kontakt mit den benutzten Fetten ableiten lassen. Nach Buttery konnten 45 flüchtige Bestandteile bei diesen Herstellverfahren identifiziert werden, wobei Pyrazin-Verbindungen als Hauptfaktor erkennbar waren. Dieses typische, geschmacklich intensive Kartoffelaroma ist bei den normalerweise angewandten Herstellverfahren nicht zu verzeichnen.

Bei aus Kartoffeln hergestellten Pommes Frites sollte - wie von der erfindungsgemäßen Lösung sichergestellt - der Geschmack arttypisch, frei von Fremdgeschmack, Ranzigkeit und Bitterkeit sein, bei einheitlich goldbrauner Farbe ohne Streifen bzw. Flecken. In der Oberflächenbeschaffenheit wird eine knusprige Kruste ohne Härte, Lederartigkeit sowie gummiartiger Beschaffenheit gefordert, wobei das Innere - etwa den gekochten Kartoffeln vergleichbar - mehlig und nicht wässrig bzw. pampig sein sollte, wobei jedoch keine Trennung zwischen der knusprigen Kruste und dem etwas mehligen Kern gewünscht wird.

Der erfindungsgemäßen Lösung liegt daher die Aufgabe zugrunde, ein neuartiges - qualitativ hochwertiges - Nahrungsmittel - z.B. in Pommes-Frites-Form - zu schaffen, welches unter Einsatz der erfindungsgemäßen Vorrichtung sowie des Verfahrens auf einfache und preiswerte Weise in den unterschiedlichsten Geschmacks-, Form- und Nährstoff-Varianten hergestellt werden kann. Dem "Wellness-Trend", gesund, wohlschmeckend, abwechslungsreich und salzarm, wird hierdurch Rechnung getragen.

Die erfindungsgemäße Aufgabe wird dadurch gelöst, daß die äußere und/oder innere Form sowie der Zustand der Fruchtkörper so verändert und bearbeitet werden, daß Geschmacksträger adhäsiv, kohäsiv, durch Formschluß oder Beimengung in transport- und gebrauchssicherer sowie den menschlichen Verzehransprüchen angepaßter Form an- und/oder eingelagert werden können.

Vorzugsweise kann das erfindungsgemäße Verfahren und die Vorrichtung an Kartoffeln eingesetzt werden, jedoch sind auch andere Fruchtarten damit zu verarbeiten und zu veredeln.

Das erfindungsgemäße Verfahren kann vorzugsweise an quaderförmigen Pommes-Frites- oder Fruchtkörpern eingesetzt werden, bei welchen die Geschmackskanäle parallel zur Längsachse geführt sind. Die erfindungsgemäße Verarbeitung kann bei Pommes-Frites- oder Fruchtkörpern der unterschiedlichsten Form durchgeführt werden. So sind stabförmige, sternchenförmige, kugel- bzw. tonnenförmige, würfelförmige, dreiecksförmige oder beliebig geformte Pommes-Frites-Körper denkbar.

Die erfindungsgemäß an- oder eingebrachten Geschmackskörper sind beliebig variierbar. So können Erdnußbutter, Apfelmus, Fruchtpürees, Gewürzmassen wie Kümmel, Pfeffer, Cayenne usw., Fischmassen, Krustentiermassen, Fleischmassen usw., benutzt werden.

Bei einer erfindungsgemäßen Variante werden die Früchte nicht in der pommes-frites-üblichen festen Form, sondern als zermahlene, gestückelte bzw. viskose Masse der Weiterverarbeitung zugeführt, wobei zerkleinerte Früchtemassen, Lebensmittelgranulat bzw. -brei, wie z.B. Käse, Fleisch, Nüsse usw., zugegeben und im Basismaterial entweder in inhomogener oder in homogener Form verteilt sind.

Weitere erfindungsgemäße Ausführungsformen und Verfahrensvarianten sind den Unteransprüchen zu entnehmen.

Eine erfindungsgemäße Form ist in den Zeichnungen dargestellt.
- Fig. 1:: Die Eintragungsvorrichtung (3) ist mit mehreren Eintragungs-Hohlnadeln (2) bestückt, welche vorzugsweise achsparallel in den Pommes-Frites- oder Fruchtkörper (1) hinein- und bis zum Endpunkt durchstoßen. Bei diesem Vorgang werden die Geschmackskanäle (4) hergestellt, in welche beim Zurückfahren die in den Unteransprüchen beschriebenen Geschmacksträger eingebracht werden. Der Durchstoßungsvorgang kann naturgemäß auch vor dem Endpunkt gestoppt, die Eintragungsvorrichtung herausgefahren, Stanzkerne ausgestoßen und danach der Füllvorgang realisiert werden.

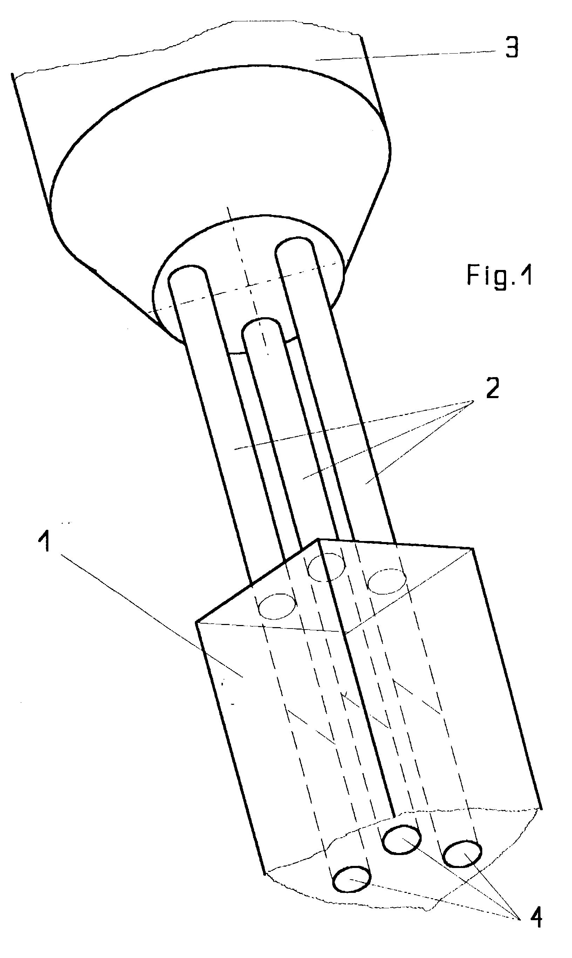

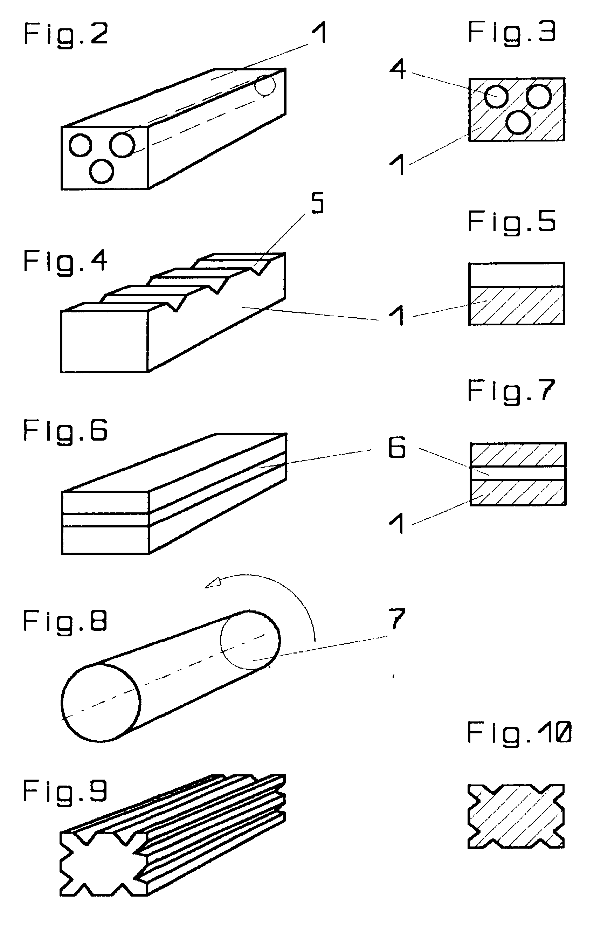

- In den Figuren 2-10:: Sind unterschiedliche Formen von Pommes-Frites- oder Fruchtkörpern (1) dargestellt. So wird z.B. in Fig. 2 die quaderförmige Variante mit den achsparallel durchgestoßenen Geschmackskanälen (4) dargestellt, wobei die Zahl der Geschmackskanäle je nach Größe des Pommes-Frites-Körpers und Durchmesser der Eintragungs-Hohlnadeln (2) von 1 bis in einen höheren Bereich hin variiert werden kann. Fig. 3 zeigt den Schnitt quer zur Längsachse des Pommes-Frites-Körpers aus Fig. 2, wobei für diese Variante die Plazierung der Geschmackskanäle (4) auf einem gleichseitigen Dreieck erkennbar ist.
- Fig. 4:: Zeigt einen quaderförmigen Pommes-Frites- oder Fruchtkörper (1), der zwecks Verbesserung der Aufnahme von Geschmacksträgern mindestens an einer Oberfläche mit Querrillen (5) versehen ist. Die Geschmacksträger können durch Wälzen, Spritzen, Streichen usw. aufgetragen werden. Es ist ohne weiteres möglich, diese Querrillen auf die Gesamtoberfläche auszudehnen.
- Fig. 5:: Hier ist der Schnitt von Fig. 4 dargestellt.
- Fig. 6:: Zeigt einen längsgeteilten Pommes-Frites- oder Fruchtkörper (1), der vorzugsweise mittig mit einem Geschmacksstreifen (6) versehen wurde, wie es in den Unteransprüchen beschrieben ist.
- Fig. 7:: Zeigt den Schnitt von Fig. 6 quer zur Längsachse.
- Fig. 8:: Zeigt einen rotationssymmetrischen Pommes-Frites- oder Fruchtkörper, der in der Geschmacksträgermasse gewälzt werden kann.
- In Fig. 9 und 10:: Wird ein Pommes-Frites- oder Fruchtkörper (1) mit Längsrillen zur Vergrößerung der Oberfläche dargestellt.

### Bezugszeichenliste:

1) Pommes-Frites-Körper
2) Eintragungs-Hohlnadeln
3) Eintragungsvorrichtung
4) Geschmackskanäle
5) Querrillen
6) Geschmacksstreifen
7) stabförmiger Pommes-Frites-Körper

## Patentansprüche

1. Verfahren und Vorrichtung zur Herstellung von Nahrungsmitteln, basierend auf natürlichen Früchten,
**dadurch gekennzeichnet**,
daß die äußere und/oder innere Form sowie der Zustand der Fruchtkörper so verändert und bearbeitet werden, daß Geschmacksträger adhäsiv, kohäsiv, durch Formschluß oder Beimengung in transport- und gebrauchssicherer sowie den menschlichen Verzehransprüchen angepaßter Form an- und/oder eingelagert werden können.

2. Verfahren und Vorrichtung zur Herstellung von Nahrungsmitteln, basierend auf natürlichen Früchten, nach Anspruch 1,
**dadurch gekennzeichnet**,
daß Kartoffeln oder Mais oder Reis bzw. Sojaprodukte benutzt werden.

3. Verfahren zur Herstellung von Nahrungsmitteln, basierend auf natürlichen Früchten, nach Anspruch 1,
**dadurch gekennzeichnet**,
daß die Früchte zu pommes-frites-ähnlichen Körpern (Quader) geschnitten und weiterverarbeitet werden.

4. Verfahren zur Herstellung von Nahrungsmitteln, basierend auf natürlichen Früchten, nach einem oder mehreren der Ansprüche 1 - 3,
**dadurch gekennzeichnet**,
daß stabförmige, rotationssymmetrische Körper geschnitten und weiterverarbeitet werden.

5. Verfahren zur Herstellung von Nahrungsmitteln, basierend auf natürlichen Früchten, nach einem oder mehreren der Ansprüche 1 - 4,
**dadurch gekennzeichnet**,
daß sternförmige Körper geschnitten und weiterverarbeitet werden.

6. Verfahren zur Herstellung von Nahrungsmitteln, basierend auf natürlichen Fruchten, nach einem oder mehreren der Ansprüche 1 - 5,
**dadurch gekennzeichnet**,
daß kugel- oder tonnenförmige Körper geschnitten und weiterverarbeitet werden.

7. Verfahren zur Herstellung von Nahrungsmitteln, basierend auf natürlichen Früchten, nach einem oder mehreren der Ansprüche 1 - 6,
**dadurch gekennzeichnet**,
daß würfelförmige Körper geschnitten und weiterverarbeitet werden.

8. Verfahren zur Herstellung von Nahrungsmitteln, basierend auf natürlichen Früchten, nach einem oder mehreren der Ansprüche 1 - 7,
**dadurch gekennzeichnet**,
daß dreieckförmige Körper geschnitten und weiterverarbeitet werden.

9. Verfahren zur Herstellung von Nahrungsmitteln, basierend auf natürlichen Früchten, nach einem oder mehreren der Ansprüche 1 - 8,
**dadurch gekennzeichnet**,
daß in den Pommes-Frites- oder Fruchtkörper (1) Erdnußbutter eingetragen wird.

10. Verfahren zur Herstellung von Nahrungsmitteln, basierend auf natürlichen Früchten, nach einem oder mehreren der Ansprüche 1 - 9,
**dadurch gekennzeichnet**,
daß in den Pommes-Frites- oder Fruchtkörper (1) die bekannte Rot-Weiß-Mischung (Ketchup und Mayonnaise) eingetragen wird.

11. Verfahren zur Herstellung von Nahrungsmitteln, basierend auf natürlichen Früchten, nach einem oder mehreren der Ansprüche 1 - 10,
**dadurch gekennzeichnet**,
daß in den Pommes-Frites- oder Fruchtkörper (1) Soßen, wie z.B. Currysoße, eingetragen werden.

12. Verfahren zur Herstellung von Nahrungsmitteln, basierend auf natürlichen Früchten, nach einem oder mehreren der Ansprüche 1 - 11,
**dadurch gekennzeichnet**,
daß in den Pommes-Frites- oder Fruchtkörper (1) Fleischpüree eingetragen wird.

13. Verfahren zur Herstellung von Nahrungsmitteln, basierend auf natürlichen Früchten, nach einem oder mehreren der Ansprüche 1 - 12,
**dadurch gekennzeichnet**,
daß in den Pommes-Frites- oder Fruchtkörper (1) Marmelade eingetragen wird.

14. Verfahren zur Herstellung von Nahrungsmitteln, basierend auf natürlichen Früchten, nach einem oder mehreren der Ansprüche 1 - 13,
**dadurch gekennzeichnet**,
daß in den Pommes-Frites- oder Fruchtkörper (1) Gewürzmasse, wie z.B. Kümmel, eingetragen wird.

15. Verfahren zur Herstellung von Nahrungsmitteln, basierend auf natürlichen Früchten, nach einem oder mehreren der Ansprüche 1 - 14,
**dadurch gekennzeichnet**,
daß in den Pommes-Frites- oder Fruchtkörper (1) Fruchtmasse, wie z.B. Mango, eingetragen wird.

16. Verfahren zur Herstellung von Nahrungsmitteln, basierend auf natürlichen Früchten, nach einem oder mehreren der Ansprüche 1 - 15,
**dadurch gekennzeichnet**,
daß in den Pommes-Frites- oder Fruchtkörper (1) Fruchtmasse, wie z.B. Apfelmus, eingetragen wird.

17. Verfahren zur Herstellung von Nahrungsmitteln, basierend auf natürlichen Früchten, nach einem oder mehreren der Ansprüche 1 - 16,
**dadurch gekennzeichnet**,
daß in den Pommes-Frites- oder Fruchtkörper (1) Thunfischmasse in Püree- oder Granulatform eingetragen wird.

18. Verfahren zur Herstellung von Nahrungsmitteln, basierend auf natürlichen Früchten, nach einem oder mehreren der Ansprüche 1 - 17,
**dadurch gekennzeichnet**,
daß in den Pommes-Frites- oder Fruchtkörper (1) Krustentiermasse in Püree- oder Granulatform eingetragen wird.

19. Verfahren zur Herstellung von Nahrungsmitteln, basierend auf natürlichen Früchten, nach einem oder mehreren der Ansprüche 1 - 18,
**dadurch gekennzeichnet**,
daß in den Pommes-Frites- oder Fruchtkörper (1) Fleisch-, Fisch- Frucht- oder Gewürzmasse als Fond oder Glace eingetragen werden.

20. Verfahren zur Herstellung von Nahrungsmitteln, basierend auf natürlichen Früchten, nach einem oder mehreren der Ansprüche 1 - 19,
**dadurch gekennzeichnet**,
daß dünnflüssigen Eintragungsmedien gelatineartige, den Viskositätsgrad steigernde, Zusätze beigefügt werden.

21. Vorrichtung zur Herstellung von Nahrungsmitteln, basierend auf natürlichen Früchten, nach einem oder mehreren der Ansprüche 1 - 20,
**dadurch gekennzeichnet**,
daß die Eintragungsvorrichtung (3) mindestens eine Eintragungs-Hohlnadel (2) enthält.

22. Vorrichtung zur Herstellung von Nahrungsmitteln, basierend auf natürlichen Früchten, nach einem oder mehreren der Ansprüche 1 - 21,
**dadurch gekennzeichnet**,
daß die Eintragungsvorrichtung (3) vorzugsweise 3 Eintragungs-Hohlnadeln enthält.

23. Verfahren zur Herstellung von Nahrungsmitteln, basierend auf natürlichen Früchten, nach einem oder mehreren der Ansprüche 1 - 22,
**dadurch gekennzeichnet**,
daß die Eintragungsvorrichtung (3) die auf ihrer Vorderseite plazierten Eintragungs-Hohlnadeln (2) vorzugsweise achsparallel in den Pommes-Frites-Körper (1) einstößt und beim Zurückfahren den jeweiligen Geschmacksträger in Strangform innerhalb der Geschmackskanäle (4) hinterläßt.

24. Verfahren zur Herstellung von Nahrungsmitteln, basierend auf natürlichen Früchten, nach einem oder mehreren der Ansprüche 1 - 23,
**dadurch gekennzeichnet**,
daß der Pommes-Frites- oder Fruchtkörper (1) vorzugsweise als Bündelmasse parallel zur Längsachse aufgeschnitten wird und eine und/oder beide Trennflächen mit dem Geschmacksträger in Folienform oder als Spritzgut versetzt werden.

25. Verfahren zur Herstellung von Nahrungsmitteln, basierend auf natürlichen Früchten, nach einem oder mehreren der Ansprüche 1 - 24,
**dadurch gekennzeichnet**,
daß der längsgeteilte Pommes-Frites- oder Fruchtkörper (1) mit dem eingelegten Geschmacksstreifen (6) durch die überschüssige Stärke bzw. Eiweiß und/oder wahlweise zugefügten Adhäsionsverstärkern während des Frittiervorgangs verbunden wird.

26. Verfahren zur Herstellung von Nahrungsmitteln, basierend auf natürlichen Früchten, nach einem oder mehreren der Ansprüche 1 - 25,
**dadurch gekennzeichnet**,
daß der Pommes-Frites- oder Fruchtkörper (1) an seiner Oberfläche mit adhäsionssteigernden Medien beaufschlagt wird, so daß der Wälzvorgang in der Geschmacksträgermasse zu einer verstärkten und sichereren Anhaftung führt.

27. Verfahren zur Herstellung von Nahrungsmitteln, basierend auf natürlichen Früchten, nach einem oder mehreren der Ansprüche 1 - 26,
**dadurch gekennzeichnet**,
daß der Pommes-Frites- oder Fruchtkörper (1) in einer Gewürzmasse gewälzt wird.

28. Verfahren zur Herstellung von Nahrungsmitteln, basierend auf natürlichen Früchten, nach einem oder mehreren der Ansprüche 1 - 27,
**dadurch gekennzeichnet**,
daß der Pommes-Frites- oder Fruchtkörper (1) auf seiner gesamten Oberfläche mit nebeneinanderliegenden Längsrillen versehen wird, welche durch die Vergrößerung der Körperoberfläche eine größere Menge an Geschmacksstoffen binden können.

29. Verfahren zur Herstellung von Nahrungsmitteln, basierend auf natürlichen Früchten, nach einem oder mehreren der Ansprüche 1 - 28,
**dadurch gekennzeichnet**,
daß die Herstellung von Pommes-Frites-oder Fruchtkörpern (1) auf einer Bandstrecke erfolgt, wo z.B. die zurechtgeschnittenen Körper vorab mit einer Eintragungsvorrichtung (3), die eine Vielzahl von Eintragungs-Hohlnadeln (2) enthält, mit den Geschmacksträgern gefüllt und erst anschließend - in der nächsten Fertigungsstation - durch ein gitterartiges Messersystem zu den endgültigen, z.B. quaderförmigen, Pommes-Frites- oder Fruchtkörpern verarbeitet werden.

30. Verfahren zur Herstellung von Nahrungsmitteln, basierend auf natürlichen Früchten, nach einem oder mehreren der Ansprüche 1 - 29,
**dadurch gekennzeichnet**,
daß zur Aufbringung der Geschmacksstreifen (6) der Füllvorgang entweder mit bandartigen Geschmacksstoffkörpern erfolgt, die - je nach Pommes-Frites-Länge - abgehackt und aufgebracht werden oder über ein Nadelsystem, welches wurstartige Füllkörper einträgt.

31. Verfahren zur Herstellung von Nahrungsmitteln, basierend auf natürlichen Früchten, nach Anspruch 30,
**dadurch gekennzeichnet**,
daß zur Aufnahme größerer Geschmacksträgermengen während des Halbierungsvorganges eine Längsaushöhlung vorgesehen wird, die zusätzliche Geschmacksträgermengen aufnehmen kann.

32. Verfahren zur Herstellung von Nahrungsmitteln, basierend auf natürlichen Früchten, nach einem oder mehreren der Ansprüche 1 - 31,
**dadurch gekennzeichnet**,
daß die in die Geschmackskanäle (4) eingetragenen Geschmacksträger vor dem Herausfallen dadurch gesichert werden, daß der Eintragungsvorgang in dem rohen Pommes-Frites- oder Fruchtkörper erfolgt und während der Frittiervorgänge sich der Lochdurchmesser reduziert.

33. Verfahren zur Herstellung von Nahrungsmitteln, basierend auf natürlichen Früchten, nach einem oder mehreren der Ansprüche 1 - 32,
**dadurch gekennzeichnet**,
daß in Verbindung mit den Geschmacksträgern und/oder in Alleinstellung ein Geschmacksverstärker, wie z.B. Glutamat, eingesetzt wird.

34. Verfahren zur Herstellung von Nahrungsmitteln, basierend auf natürlichen Früchten, nach einem oder mehreren der Ansprüche 1 - 33,
**dadurch gekennzeichnet**,
daß die Pommes-Frites- oder Fruchtkörper als beliebige geometrische Körper geschnitten, geformt bzw. gepreßt und weiterverarbeitet werden.

35. Verfahren zur Herstellung von Nahrungsmitteln, basierend auf natürlichen Früchten, nach einem oder mehreren der Ansprüche 1 - 34,
**dadurch gekennzeichnet**,
daß die Kartoffeln bzw. alternativ benutzbaren Früchte in größeren bzw. kleineren Abmessungen als die klassische Pommes-Frites-Größe hergestellt und weiterverarbeitet werden.

36. Verfahren zur Herstellung von Nahrungsmitteln, basierend auf natürlichen Früchten, nach einem oder mehreren der Ansprüche 1 - 35,
**dadurch gekennzeichnet**,
daß die Früchte nicht in der Pommes-Frites-üblichen festen Form, sondern als zermahlene, gestückelte bzw. viskose Masse der Weiterverarbeitung zugeführt werden.

37. Verfahren zur Herstellung von Nahrungsmitteln, basierend aufnatürlichen Früchten, nach einem oder mehreren der Ansprüche 1 - 36,
**dadurch gekennzeichnet**,
daß der zerkleinerten Früchtemasse Lebensmittelgranulat bzw. -brei, wie z.B. Käse, Fleisch, Nüsse usw., zugegeben und im Basismaterial in homogener und/oder nicht homogener Form verteilt sind.

38. Verfahren zur Herstellung von Nahrungsmitteln, basierend auf natürlichen Früchten, nach einem oder mehreren der Ansprüche 1 - 37,
**dadurch gekennzeichnet**,
daß der Pommes-Frites- oder Fruchtkörper, bestehend aus festem bzw. kleinkörnigem oder breiigem Material, mit Sepiafarbe eingefärbt ist.

39. Verfahren zur Herstellung von Nahrungsmitteln, basierend auf natürlichen Früchten, nach einem oder mehreren der Ansprüche 1 - 38,
**dadurch gekennzeichnet**,
daß der Pommes-Frites- oder Fruchtkörper, bestehend aus festem bzw. kleinkörnigem oder breiigem Material, mit den bekannten Lebensmittelfarben eingefärbt ist.

40. Verfahren zur Herstellung von Nahrungsmitteln, basierend auf natürlichen Früchten, nach einem oder mehreren der Ansprüche 1 - 39,
**dadurch gekennzeichnet**,
daß der Pommes-Frites- oder Fruchtkörper durch Mayonnaise, Ketchup, Curry, Salza, den bekannten Gemüsesorten, Hackfleisch, Fisch, Geflügel, Obst, Käse, Nüsse versetzt bzw. aromatisiert ist.

41. Verfahren zur Herstellung von Nahrungsmitteln, basierend auf natürlichen Früchten, nach einem oder mehreren der Ansprüche 1 - 40,
**dadurch gekennzeichnet**,
daß die Auf- bzw. An- oder Einbringung von Aromaten und/oder Geschmacksstoffen mittels Geschmacksfäden (Spritzverfahren, Extruderverfahren), Parfümierung mittels eines Bedampfungsvorgangs, Tauchen, Tränken, Panieren (wobei eine Haftungsverbesserung mittels Stärke und/oder Eiweiß erfolgen kann), Besprühen, Bespritzen bzw. Bestreichen erfolgt.

42. Verfahren zur Herstellung von Nahrungsmitteln, basierend auf natürlichen Früchten, nach einem oder mehreren der Ansprüche 1 - 41,
**dadurch gekennzeichnet**,
daß im Verbraucherbereich die Pommes-Frites- oder Fruchtkörper in der Fritteuse, im Backofen bzw. in der Bratpfanne dem Endgarvorgang unterworfen werden.
